# EUROPÄISCHE PATENTSCHRIFT

(11) **EP 1 096 161 B1**
(45) Veröffentlichungstag und Bekanntmachung des Hinweises auf die Patenterteilung: **06.04.2005**
(21) Anmeldenummer: 00122949.1
(22) Anmeldetag: 21.10.2000
(51) Int. Cl.: F16C 11/06

(54) **Kugelgelenk**
Ball-joint
Articulation à rotule

(30) Priorität: 30.10.1999 DE 19952427
(43) Veröffentlichungstag der Anmeldung: 02.05.2001
(73) Patentinhaber: AUDI AG, 85045 Ingolstadt (DE)
(72) Erfinder: Kur, Jaromir, 85051 Ingolstadt (DE)

(56) Entgegenhaltungen:
- CH-A- 465 971
- DE-A- 1 575 708
- DE-A- 19 647 024
- DE-A- 19 705 061
- US-A- 3 381 987
- US-A- 4 241 928
- US-A- 4 447 094
- US-A- 4 552 480

## Beschreibung

Die Erfindung betrifft ein Kugelgelenk, insbesondere für Fahrwerksteile von Kraftfahrzeugen, gemäß dem Oberbegriff des Patentanspruches 1.

Derartige Kugelgelenke sind z. B. an Fahrwerksteilen von Kraftfahrzeugen als Trag- und Führungsgelenke und an Lenkungen als Spurstangengelenke häufig verwendet. Deren Lebensdauer ist stark davon abhängig, dass der Gelenkinnenraum hermetisch dicht und gut geschmiert bleibt, insbesonders vor Feuchtigkeit und Schmutz geschützt ist. So führt eine Beschädigung der Abdichtmanschette - z. B. durch Steinschlag - zwangsläufig zu einem erhöhten Verschleiß bzw. zu einer stark verminderten Lebensdauer.

Aus der gattungsbildenden DE 196 47 024 A1 ist bereits ein Kugelgelenk für Fahrwerkteile von Kraftfahrzeugen bekannt, das ein Gelenkgehäuse mit einer Lageraufnahme und einem Gelenkzapfen mit Gelenkkugeln sowie einer Abdichtmanschette und einem integrierten Schmiermittel aufweist, wobei am Austritt der Gelenkkugel aus der Lageraufnahme eine zweite Abdichtung mittels zumindest eines Dichtringes vorgesehen ist.

Konkret ist hier eine zweite Abdichtung mittels eines zusätzlichen O-Rings vorgesehen, welcher an der offenen Seite des Gelenkgehäuses in eine dort ausgebildete Ringnut eingelegt ist. Eine derartige Schwächung des Kugelgelenkgehäuses im Bereich der Lageraufnahme ist jedoch wenig praktikabel und außerdem aufwendig in der Herstellung.

Ein herkömmlicher Dichtungsbalg für Kugelgelenke ist ferner aus der DE 1575708 bekannt.

Es ist Aufgabe der Erfindung, ein Kugelgelenk vorzuschlagen, das auf einfache Weise eine verbesserte Abdichtung mit hoher Funktionssicherheit aufweist.

Diese Aufgabe wird erfindungsgemäß mit den Merkmalen des Patentanspruches 1 gelöst. Vorteilhafte Weiterbildungen der Erfindung sind Gegenstand der Unteransprüche.

Gemäß Anspruch 1 ist der Dichtring in einem die Gelenkkugel im Gelenkgehäuse haltenden Haltering vorgesehen. Diese Anordnung des Dichtringes in einem Haltering führt zu einer festen Halterung der Kugel im Gehäuse bei gleichzeitig guter Abdichtung.

Die zweite Abdichtung kann in baulich einfacher Weise durch einen O-Ring gebildet sein, der in einem die Lageraufnahme haltenden Haltering angeordnet sein kann, oder es kann ein Konusring mit einer angeformten Dichtwulst verwendet sein, der mit dem Haltering z. B. durch Kleben oder Anvulkanisieren fest verbunden ist. Daraus resultiert eine baulich einfache, kostengünstige und montagegünstige Konstruktion.

Ferner wird vorgeschlagen, den Gelenkzapfen und die Gelenkkugel aus einem korrisionsbeständigem Werkstoff herzustellen, bevorzugt aus Edelstahl. Damit wird unter anderem einer Spaltkorrosion entgegengewirkt, die sich bei starkem Feuchtigkeitseinfluss zwischen dem Gelenkzapfen und der Abdichtmanschette ausbilden kann und die ebenfalls zu Undichtigkeiten bzw. zum Eindringen von Feuchtigkeit ins Gelenkinnere führen kann.

Dazu kann es ferner vorteilhaft sein, wenn der die Abdichtung zwischen Gelenkzapfen und Abdichtmanschette verstärkende Spannring innerhalb der Abdichtmanschette liegt und/oder wenn in diesem Dichtbereich ein temperatur- und verschleißfester Vitonring (als Präzisionsdichtung u.a. bei Stoßdämpfern bekannt) eingesetzt wird.

Durch die zweite Abdichtung entstehen quasi zwei Gelenkräume, die nach einem weiteren Vorschlag beide mit Schmiermittel befüllt werden. Dabei können ggf. hinsichtlich ihrer Eigenschaften und Konsistenz unterschiedliche Schmiermittel eingesetzt werden, wobei in dem funktionellen Gelenkteil bevorzugt ein auf Verschleißminimierung gerichtetes Schmiermittel und im Bereich des Gelenkzapfens ein der Korrosionsbildung entgegenwirkendes Schmiermittel eingesetzt werden kann.

Zwei Ausführungsbeispiele der Erfindung sind im folgenden mit weiteren Einzelheiten näher erläutert. Die schematische Zeichnung zeigt ein Kugelgelenk für eine Radaufhängung eines Kraftfahrzeuges in einem Schnitt durch die Längsmittelachse des Gelenkzapfens mit Gelenkkugel, mit einem Gehäuse, einer Abdichtmanschette und einer zweiten Abdichtung mittels eines zweiten Dichtringes. Dabei zeigen die linke und die rechte Zeichnungshälfte unterschiedliche Ausführungen der Abdichtung.

Das dargestellte Kugelgelenk 10 setzt sich im wesentlichen zusammen aus einem Gehäuse 12, einer Lageraufnahme 14, einer Gelenkkugel 16 mit einem angeformten Gelenkzapfen 18, einem mit dem Gehäuse 12 festverbundenen Haltering 20 und einer gummielastischen Abdichtmanschette 22. Soweit nicht beschrieben, ist das Kugelgelenk 10 bekannter Bauart.

Zunächst ist das Kugelgelenk 10 bzw. das Gelenkinnere mittels der Abdichtmanschette 22 abgedichtet, wobei die Abdichtmanschette 22 an der gehäuseseitigen, ringförmigen Dichtlippe 22a und an der ebenfalls ringförmigen Dichtlippe 22b für den Gelenkzapfen 18 mittels Spannringe 24 dicht angepresst ist. Ggf. kann in ansich bekannter Weise ein Abstandsring 26 in den Bereich zwischen der Gelenkkugel 16 und dem Gelenkzapfen 18 vorgesehen sein.

Die Gelenkkugel 16 ist in der kalottenförmigen Lageraufnahme 14 schwenk- und drehbar gelagert, wobei die Lageraufnahme 14 auch mehrteilig sein kann (entsprechend bekannten Kugelgelenkkonstruktionen).

Es wird nunmehr Bezug genommen auf die rechte Zeichnungshälfte, gemäß der der zapfenseitige Spannring 24 - wie ersichtlich - innerhalb der Abdichtmanschette 22 liegt und somit korrosionsgeschützt ist. Montagetechnisch ist dies kein Problem, da der Spannring 24 vorher an der Dichtlippe 22b montiert und zusammen mit der Abdichtmanschette 22 auf den konusförmigen Abschnitt des Gelenkzapfens 18 aufgeschoben werden kann, bis die Dichtlippe 22b in die korrospondierende Ringnut (ohne Bezugszeichen) des Gelenkzapfens 18 einfedert.

In dem Haltering 20 ( noch rechte Zeichnungshälfte) ist als zweite Abdichtung des Kugelgelenkes 10 ein gummielastischer Dichtring 28 (ein sogenannten O-Ring) in einer Ringnut 30 angeordnet, der den Bereich unterhalb des Dichtringes 28 zwischen Gelenkkugel 16, Lageraufnahme 14 und Gehäuse 12 abdichtet. Der Dichtring 28 ist dabei so positioniert, dass er bei allen möglichen Schwenkwinkeln des Gelenkzapfens 18 in Anlage an der Gelenkkugel 16 bleibt.

In diesem Bereich unterhalb des Dichtringes 28 ist ein erstes Schmiermittel bzw. Gelenkfett in nicht dargestellte Schmiermitteltaschen eingebracht, das besonders gute Gleiteigenschaften zwischen Gelenkkugel 16 und Lageraufnahme 14 sicherstellt, z.B. mit PG 75 Molycote® oder Klüberfett.

Oberhalb des Dichtringes 28 und innerhalb der Abdichtmanschette 22 ist ein weiteres Schmiermittel eingebracht, das neben seinen Schmiereigenschaften besonders korrosionsschützend bzw. feuchtigkeitsabweisend wirkt, z. B. Longtem 2/78 Molycote®.

Bei dem Kugelgelenk 10 gemäß der linken Zeichnungshälfte ist an dem Haltering 20 ein gummielastischer Konusring 34 mit einer angeformten ringförmigen Dichtwulst 36 aus einem Abdichtmaterial angeordnet, der mit dem Haltering 20 fest verbunden ist (z.B. durch Kleben oder Vulkanisation).

Zur Abdichtung zwischen der Abdichtmanschette 22 und dem Gelenkzapfen 18 ist ein Vitonring 38 mit zwei Dichtlippen 38a vorgesehen, der in einen im Querschnitt H-förmigen starren Zwischenring 40 eingesetzt ist; zugleich ist die Abdichtmanschette 20 in einem äußeren ringförmigen Spalt des Zwischenringes 40 gehalten (z.B. mittels Klebeverbindung, Vulkanisation und/oder Pressverbindung).

Durch den Einsatz des Vitonringes 38 ist eine besonders zuverlässige Abdichtung mit hoher Präzision und Lebensdauer hergestellt.

Ferner sind die Gelenkkugel 16 und der Gelenkzapfen 18 aus Edelstahl, z.B. X35CrMo17 (DIN 4122) oder X22CrNi17 (DIN 4057), hergestellt, wodurch insbesondere Spaltkorrosionen zuverlässig vermieden sind.

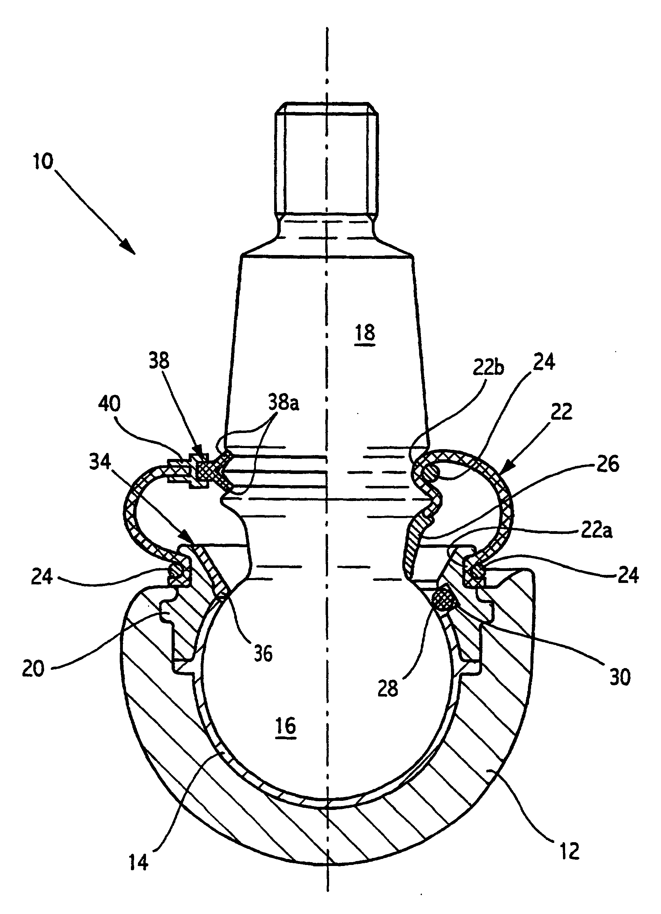

## Patentansprüche

1. Kugelgelenk, insbesondere für Fahrwerkteile von Kraftfahrzeugen, mit einem Gelenkgehäuse (12), mindestens einer Lageraufnahme (14) und einem Gelenkzapfen (18) mit Gelenkkugel (16) sowie einer Abdichtmanschette (22) und einem integrierten Schmiermittel, wobei am Austritt der Gelenkkugel (16) aus der Lageraufnahme (14) eine zweite Abdichtung mittels zumindest eines Dichtringes (28; 34, 36) vorgesehen ist, **dadurch gekennzeichnet, dass** der Dichtring (28; 34, 36) in einem die Gelenkkugel (16) im Gelenkgehäuse (12) haltenden Haltering (20) vorgesehen ist.

2. Kugelgelenk nach Anspruch 1, **dadurch gekennzeichnet, dass** der Dichtring (28) ein in einer Ringnut (30) des Halteringes (20) angeordneter O-Ring ist.

3. Kugelgelenk nach Anspruch 1, **dadurch gekennzeichnet, dass** der Dichtring ein mit einem Dichtwulst (36) versehener Konusring (34) ist, der mit dem Haltering (20) fest verbunden ist.

4. Kugelgelenk nach einem oder mehreren der vorhergehenden Ansprüche, **dadurch gekennzeichnet, dass** der Gelenkzapfen (18) und die Gelenkkugel (16) aus korrosionsbeständigem Werkstoff hergestellt sind.

5. Kugelgelenk nach Anspruch 4, **dadurch gekennzeichnet, dass** der Gelenkzapfen (18) und die Gelenkkugel (16) aus Edelstahl hergestellt sind.

6. Kugelgelenk nach einem oder mehreren der vorhergehenden Ansprüche, **dadurch gekennzeichnet, dass** der die Abdichtmanschette (22) am Gelenkzapfen (18) haltende Spannring (24) innerhalb der Abdichtmanschette (22) liegt.

7. Kugelgelenk nach einem oder mehreren der vorhergehenden Ansprüche, **dadurch gekennzeichnet, dass** die Abdichtung zwischen der Abdichtmanschette (22) und dem Gelenkzapfen (18) mittels eines temperatur- und verschleißfesten Vitonringes (38) erfolgt.

8. Kugelgelenk nach Anspruch 7, **dadurch gekennzeichnet, dass** der Vitonring (38) in einem starren Zwischenring (40) gehalten ist, welcher Zwischenring (40) andererseits mit der Abdichtmanschette (22) fest verbunden ist.

9. Kugelgelenk nach einem oder mehreren der vorhergehenden Ansprüche, **dadurch gekennzeichnet, dass** innerhalb der Abdichtmanschette (22) sowohl der Bereich oberhalb der zweiten Abdichtung als auch der im Bereich der Gelenkkugel (16) liegende Bereich unterhalb der zweiten Abdichtung mit einem Schmiermittel befüllt ist.

10. Kugelgelenk nach Anspruch 9, **dadurch gekennzeichnet, dass** unterschiedliche Schmiermittel verwendet sind, von denen das Schmiermittel um die Gelenkkugel (16) besonders gute Gleiteigenschaften vermittelt und das andere Schmiermittel besonders korrosionsschützend ist.

## Claims

1. Ball joint, in particular for chassis parts of motor vehicles, comprising a joint housing (12), at least one bearing seat (14) and a joint pin (18) with a joint ball (16), as well as a sealing collar (22) and an integral lubricant, a second seal being provided by means of at least one sealing ring (28; 34, 36) where the joint ball (16) exits the bearing seat (14), **characterised in that** the sealing ring (28; 34, 36) is provided in a retaining ring (20) holding the joint ball (16) in the joint housing (12).

2. Ball joint according to claim 1, **characterised in that** the sealing ring (28) is an O-ring arranged in an annular groove (30) in the retaining ring (20).

3. Ball joint according to claim 1, **characterised in that** the sealing ring is a conical ring (34) provided with a sealing bead (36) and rigidly connected to the retaining ring (20).

4. Ball joint according to one or more of the preceding claims, **characterised in that** the joint pin (18) and the joint ball (16) are made of corrosion-resistant material.

5. Ball joint according to claim 4, **characterised in that** the joint pin (18) and the joint ball (16) are made of stainless steel.

6. Ball joint according to one or more of the preceding claims, **characterised in that** the clamping ring (24) holding the sealing collar (22) on the joint pin (18) is situated within the sealing collar (22).

7. Ball joint according to one or more of the preceding claims, **characterised in that** sealing between the sealing collar (22) and the joint pin (18) is effected by means of a heat-resistant and wear-resistant Viton ring (38).

8. Ball joint according to claim 7, **characterised in that** the Viton ring (38) is held in a rigid intermediate ring (40), the said intermediate ring (40) being rigidly connected at the other end to the sealing collar (22).

9. Ball joint according to one or more of the preceding claims, **characterised in that**, within the sealing collar (22), both the region above the second seal and the region below the second seal situated in the region of the joint ball (16) are filled with a lubricant.

10. Ball joint according to claim 9, **characterised in that** different lubricants are used, the lubricant around the joint ball (16) providing particularly good frictional properties and the other lubricant providing particular protection against corrosion.

## Revendications

1. Articulation à rotule, en particulier pour pièces de train de roulement de véhicules automobiles, avec un boîtier d'articulation (12), au moins un logement de palier (14) et un tourillon d'articulation (18) avec une sphère d'articulation (16), ainsi qu'avec une manchette d'étanchéité (22) et un moyen de lubrification intégré, sachant qu'à la sortie de la sphère d'articulation (16) hors du logement de palier (14) est prévu un deuxième joint d'étanchéité à l'aide d'au moins une bague d'étanchéité (28 ; 34, 36), **caractérisée en ce que** la bague d'étanchéité (28 ; 34, 36) est prévue dans une bague de maintien (20), maintenant la sphère d'articulation (16) dans le boîtier d'articulation (12).

2. Articulation à rotule selon la revendication 1, **caractérisée en ce que** la bague d'étanchéité (28) est une bague torique, disposée dans une gorge annulaire (30) de la bague de maintien (20).

3. Articulation à rotule selon la revendication 1, **caractérisée en ce que** la bague d'étanchéité est une bague conique (34) munie d'un bourrelet d'étanchéité (36), reliée rigidement à la bague de maintien (20).

4. Articulation à rotule selon une ou plusieurs des revendications précédentes, **caractérisée en ce que** le tourillon d'articulation (18) et la sphère d'articulation (16) sont fabriqués en un matériau résistant à la corrosion.

5. Articulation à rotule selon la revendication 4, **caractérisée en ce que** le tourillon d'articulation (18) de la sphère d'articulation (16) sont fabriqués en acier spécial.

6. Articulation à rotule selon une ou plusieurs des revendications précédentes, **caractérisée en ce que** la bague de serrage (24), maintenant la manchette d'étanchéité (22) sur le tourillon d'articulation (18), est placée à l'intérieur de la manchette d'étanchéité (22).

7. Articulation à rotule selon une ou plusieurs des revendications précédentes, **caractérisée en ce que** l'étanchéité, entre la manchette d'étanchéité (22) et le tourillon d'articulation (18), se fait au moyen d'une bague en Viton (38) résistante à la température et à l'usure.

8. Articulation à rotule selon la revendication 7, **caractérisée en ce que** la bague en Viton (38) est maintenue dans une bague intermédiaire (40) rigide, reliée d'autre part rigidement à la manchette d'étanchéité (22).

9. Articulation à rotule selon une ou plusieurs des revendications précédentes, **caractérisée en ce qu'**à l'intérieur de la manchette d'étanchéité (22), tant la zone située au-dessus du deuxième joint d'étanchéité, qu'également la zone située dans la zone de la sphère d'articulation (16), au-dessous du deuxième joint d'étanchéité, est remplie d'un produit lubrifiant.

10. Articulation à rotule selon la revendication 9, **caractérisée en ce que** différents produits lubrifiants sont utilisés, dont le produit lubrifiant, placé autour de la sphère d'articulation (16), confère des propriétés de glissement particulièrement bonnes et l'autre produit de lubrifiant est particulièrement protecteur contre la corrosion.
